(19) **Europäisches Patentamt**

**European Patent Office**

**Office européen des brevets**

(11) Numéro de publication: **0 131 507 B1**

(12) **FASCICULE DE BREVET EUROPEEN**

(45) Date de publication du fascicule du brevet:
**10.12.86**

(51) Int. Cl.⁴: **E 04 C 5/12,** C 21 D 1/10

(21) Numéro de dépôt: **84401390.4**

(22) Date de dépôt: **29.06.84**

(54) **Procédé pour la réalisation d'un ancrage de précontrainte par filage d'un manchon en acier sur un âme métallique.**

(30) Priorité: **06.07.83 FR 8311234**

(43) Date de publication de la demande:
**16.01.85 Bulletin 85/3**

(45) Mention de la délivrance du brevet:
**10.12.86 Bulletin 86/50**

(84) Etats contractants désignés:
**BE CH DE GB IT LI LU NL**

(56) Documents cités:
**CH - A - 532 702**
**GB - A - 472 310**
**GB - A - 485 752**
**GB - A - 710 472**
**US - A - 3 559 270**

(73) Titulaire: **G.T.M.-ENTREPOSE Société Anonyme dite:,
61 Avenue Jules Quentin, F-92000 Nanterre (FR)**

(72) Inventeur: **Augoyard, Jean-Pierre, 50, rue Domont
Village, F-95330 Domont (FR)**

(74) Mandataire: **Blétry, Robert et al, OFFICE
BLETRY 2, Boulevard de Strasbourg, F-75010 Paris (FR)**

ACTORUM AG

## Description

La présente invention concerne un procédé pour la réalisation d'un encrage de précontrainte par filage d'un manchon en acier sur une âme métallique de forme allongée et ayant une section sensiblement ronde.

Dans la tecnique de fabrication des pièces en béton précontraint, la pièce en béton à précontraindre est soumise à une compression par des vérins qui prennent appui sur le béton et qui tirent sur une ou plusieurs barres métalliques ou un ou plusieurs câbles métalliques passant à travers une ou plusieurs gaines noyées dans le béton, les barres métalliques ou les câbles métalliques étant ensuite bloqués par des ancrages sur le béton. Dans certaines techniques connues pour la réalisation des ancrages (voir par exemple les brevets FR-A-1 241 157 et 1 530 660 et le brevet US-A-3 559 270), un manchon métallique est encré au moins à l'une des extrémités de chaque câble ou de chaque barre métallique par filage à travers une filière, afin de former une tête d'ancrage capable de venir en butée sur une plaque d'appui, cette dernière prenanr elle-même appui sur le béton dans le cas d'un ancrage mort ou pouvant être raccordée au vérin de traction dans le cas d'un ancrage actif ou mobile. Il va de soi que l'ancrage entre le manchon métallique et le câble ou la barre métallique doit être capable de résister aux efforts intenses de traction auxquels le câble ou la barre est soumis en service, en général plusieurs dizaines de tonnes-force (une tonne-force vaut $0,98 \cdot 10^3$ daN), voire plus de 100 tonnes-force, sans que le manchon métallique glisse ou se détache du câble ou de la barre métallique. Parmi les procédés connus pour réaliser un tel ancrage par filage d'un manchon en acier sur une barre ou sur un câble métallique, on utilise généralement un manchon ayant un diamètre intérieur plus grand que le diamètre extérieur de la barre ou du câble métallique sur lequel le manchon doit être ancré , et on interpose entre le manchon et le câble ou la barre soit un insert métallique, rainuré intérieurement et rendu rugueux extérieurement par striation ou par molletage, soit un ressort hélicoïdal à spires jointives en acier trempé comme cela est indiqué dans les deux brevets français susmentionnés. Dans les deux cas, l'insert métalliques ou le ressort hélicoïdal est en une matière qui a une dureté plus grande que celle du manchon (la dureté du manchon devant être relativement faible pour permettre son filage à travers une filière) et que celle de la barre ou du câble métallique. Ainsi, lors du filage du manchon, l'insert métallique ou le ressort hélicoïdal s'incruste dans la surface extérieure de la barre ou du câble métallique et il assure l'ancrage entre le manchon et le câble ou la barre. Toutefois, pour réaliser un ancrage du type décrit ci-dessus, ayant une résistance à la rupture donnée, il était jusqu'à présent nécessaire dutiliser un manchon et un insert métallique ou un ressort hélicoïdal ayant une longueur relativement grande. D'après les essais effectués par la demanderesse ceci peut être expliqué de la manière suivante. En ce qui concerne les ancrages avec insert métallique, ce dernier diminue le volume efficace de la matière du manchon qui participe à l'ancrage, de sorte que cette diminution de volume doit être compensée par une augmentation de la longueur du manchon. En ce qui concerne les ancrages avec ressort hélicoïdal, il a été constaté que les spires du ressort ont tendance à s'incliner ou à se coucher pendant l'opération de filage du manchon et le ressort s'imprime ou s'incruste de façon plus ou moins régulière dans la surface extérieure de la barre ou du câble métallique, ce qui diminue l'efficacité de l'encrage.

On connaît par ailleurs un procédé pour rabouter des barres en acier pour béton armé, qui consiste à utiliser un manchon qui est fileté ou denté intérieurement et dont la surface intérieure dentée ou filetée est durcie, le manchon étant ensuite fixé sur les deux barres en acier à rabouter par filage du manchon et des deux barres à travers une matrice (voir le brevet CH-A-532 702).

Les barres en acier habituellement utilisées pour le béton armé ont en général une résistance à la rupture de 40 kg/mm², c'est-à-dire une résistance nettement plus faible que celle des barres ou des torons utilisés pour les ancrages de précontrainte, qui ont en général une résistance à la rupture de 180 kg/mm². En effet, dans le béton armé, les barres sont seulement soumises à des efforts de tension ou de compression dus au poids de l'ouvrage en béton ou à la charge supportée par celui-ci. Par contre, comme on l'a déjà indiqué plus haut, dans les ancrages de précontrainte les barres ou les torons sont soumis en permanence à une très forte tension, en général plusieurs dizaines de tonnes-force, voire plus de 100 tonnes-force.

En outre, on notera que dans le brevet CH-A-532 702, la denture intérieure du manchon est durcie superficiellement à la flamme ou par cémentation. L'épaisseur de la couche durcie par un tel procédé est relativement faible et serait tout à fait inefficace pour la réalisation d'un ancrage de précontrainte.

La présente invention a donc pour but de fournir un procédé pour la réalisation d'un ancrage de précontrainte par filage d'un manchon en acier sur une âme métallique comme par exemple décrit dans le US-A-3 559 270, permettant, à longueurs égales du manchon, d'améliorer l'efficacité de l'encrage entre le manchon et l'âme métallique, c'est-à-dire d'augmenter sa résistance à la rupture par rapport aux ancrages antérieurement connus, ou, à résistances à la rupture égales, d'utiliser un manchon ayant une longueur plus faible que dans les ancrages antérieurement connus.

A cet effet, le procédé de la présente invention est caractérisé en ce qu'il consiste à utiliser un manchon ayant un diamètre intérieur sensiblement égal au diamètre extérieur de l'âme métallique, à exécuter un rainurage ou indentation dans la surface cylindrique intérieure du manchon, à soumettre ladite surface cylindrique intérieure du manchon et son rainurage à une trempe thermique superficielle propre à en augmenter la dureté et à lui donner une valeur supérieure à celle de l'âme métallique en faisant croître la profondeur de trempe depuis une première extrémité du manchon, destinée à être engagée la première dans une filière, jusqu'à l'extrémité opposée du manchon, et à ancrer le manchon sur l'âme métallique de façon connue, par filage à travers la filière.

De préférence, l'opération de rainurage consiste à exécuter un filetage. Le profil du filet peut avoir toutes formes désirées, bien qu'une forme triangulaire ou trapézoïdale soit préférée.

La supériorité de l'ancrage obtenu par le procédé de la présente invention par rapport aux ancrages antérieurement connus peut s'expliquer par le fait qu'une plus grande quantité de la matière du manchon participe à l'ancrage, de sorte que, à résistances égales à la rupture, il devient possible de réduire la longueur du manchon ou, à longueurs égales du manchon, on obtient une plus grande résistance à la rupture. A résistances égales à la rupture, il en résulte une diminution de la longueur du manchon et, par suite, une diminution de la longueur de l'ancrage de 40 à 50% et une économie de matière de 30 à 35%. Il en résulte également une économie du temps d'usinage, puisqu'il n'y a plus qu'une seule pièce à usiner au lieu de deux. En outre, la couche de matière trempée du manchon se comporte comme une frette annulaire interne qui permet au manchon de mieux résister à l'éclatement sous les efforts intenses auxquels il est soumis en service.

On décrira maintenant, à titre d'exemple, un mode de réalisation de la présente invention en faisant référence au dessin annexé sur lequel:

la figure 1 montre, en partie en coupe axiale et en partie en élévation un manchon métallique utilisable dans le procédé de la présente invention;

les figures 2 et 3 montrent, respectivement en coupe axiale et en vue de dessus, un appareillage pour le traitement thermique du manchon de la figure 1;

la figure 4 montre le manchon placé sur un câble, juste avant que l'ensemble manchon-câble soit passé à travers une filière.

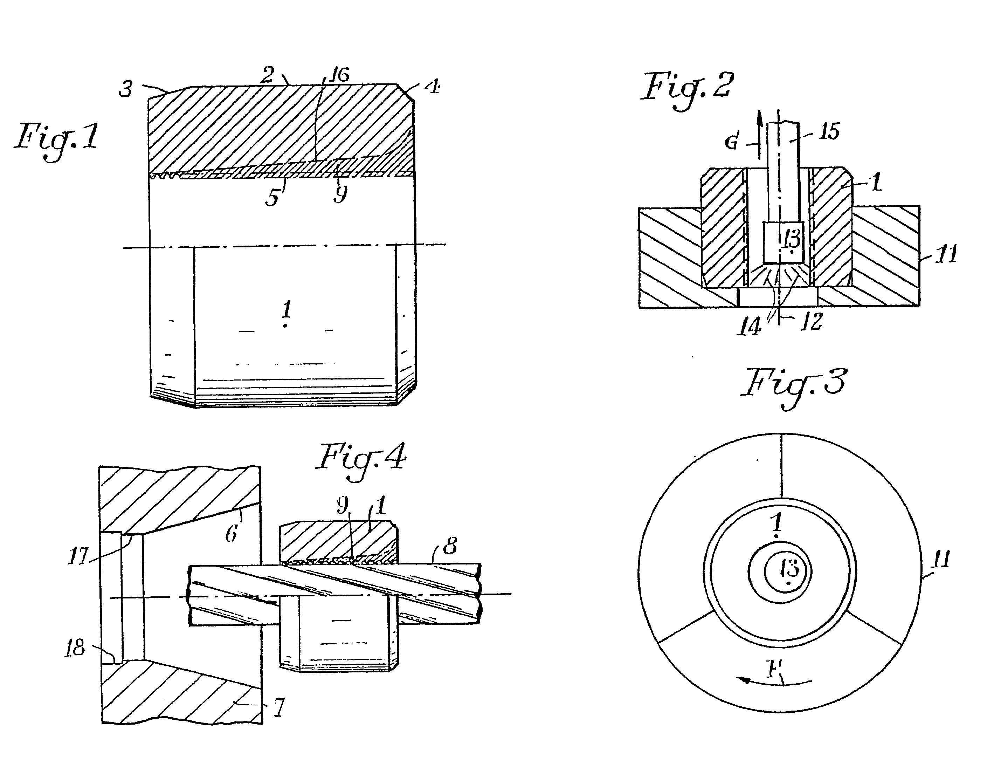

Le manchon 1 représenté sur la figure 1 a une surface extérieure cylindrique 2 terminée par deux chanfreins 3 et 4, et une surface cylindrique intérieure rainurée 5. Le chanfrein 4 peut avoir par exemple une pente de 45°, tandis que le chanfrein 3 a une pente d'environ 8°30' correspondant à la pente de l'orifice d'entrée 6 de la filière 7 utilisée pour le filage du manchon 1 sur le câble 8 (figure 4). Le rainurage de la surface cylindrique intérieure 5 peut être par exemple un filetage dont le filet a un profil triangulaire et s'étend hélicoïdalement sur toute la longueur axiale de la surface cylindrique intérieure 5 du manchon 1.

Comme cela est montré en 9 par des hachures serrées dans les figures 1 et 4, la surface cylindrique intérieure 5 du manchon 1 et son rainurage sont traités par un traitement thermique propre a leur conférer une dureté supérieure à celle du câble 8. A cet effet, comme montré dans les figures 2 et 3, le manchon 1 est placé dans un mors de serrage 11 relié à des moyens d'entraînement (non montrés) aptes à le faire tourner autour de son axe 12 comme indiqué par la flèche F dans la figure 3. Un inducteur 13 du type à haute fréquence, par exemple un inducteur fabriqué par la société «PARTIOT», est placé en position excentrée à l'intérieur de l'alésage du manchon 1 à faible distance de la surface cylindrique intérieur de ce dernier. A son extrémité inférieure, l'inducteur 13 est pourvu de buses permettant de projeter sur la surface cylindrique intérieure du manchon 1 un liquide de trempe, comme cela est schématisé par les jets 14 dans la figure 2. A son extrémité supérieure, l'inducteur 13 est relié à une tige creuse 15, à travers laquelle se fait l'alimentation en courant de l'inducteur 13 et l'alimentation en liquide de trempe des buses susmentionnées. La tige 15 est reliée à des moyens d'entraînement (non montrées) permettant de la déplacer parallèlement à l'axe 12 comme indiqué par la flèche G dans la figure 2. La vitesse de déplacement de la tige 15 est variable pour obtenir une profondeur de trempe qui croît d'une extrémité à l'autre de la surface cylindrique intérieure 5 du manchon 1 comme cela est plus particulièrement visible dans la figure 1. La vitesse de déplacement de la tige 15 et, par suite, de l'inducteur 13 est de préférence réglée de telle façon qu'elle décroisse de manière uniforme sur la majeure partie de la longueur du manchon 1 à partir de l'extrémité inférieure de celui-ci (vue dans la figure 2), c'est-à-dire à partir de son extrémité destinée à être engagée la première dans la filière 7, puis de telle façon qu'elle décroisse de plus en plus rapidement vers l'extrémité opposée du manchon. Dans ces conditions, on obtient un profil de trempe tel que celui qui est représenté par la ligne en tirets 16 de la figure 1. Un tel profil de trempe permet d'obtenir, après passage de l'ensemble manchon 1 et câble 8 à travers l'orifice 17 de la filière 7 un ancrage entre le manchon 1 et le câble 8 dont la force d'ancrage augmente depuis l'extrémité gauche jusqu'à l'extrémité droite du manchon 1 (vu dans les figures 1 et 4).

A titre d'exemple, on a indiqué dans le tableau ci-dessous les caractéristiques dimensionnelles des manchons de deux ancrages de précontrainte ayant une résistance à la rupture de 25,7 tonnes-force $(26,95 \cdot 10^3$ daN) dans le cas d'un ancrage antérieurement connu avec interposition d'un ressort entre le manchon et le câble et dans le cas d'un ancrage de la présente invention avec un manchon fileté intérieurement, respectivement.

| Dimensions du manchon | | Ancrage conventionnel avec ressort | | Ancrage avec manchon fileté | |
|---|---|---|---|---|---|
| avant filage | ⌀ extérieur | 37,5 | mm | 37,5 | mm |
| | ⌀ intérieur | 18 | mm | 16 | mm |
| | longueur | 50 | mm | 30 | mm |
| après filage | ⌀ extérieur | 32 | mm | 32 | mm |
| | longueur | 62 | mm | 37 | mm |

Dans les deux cas, le câble était constitué par un toron ayant un diamètre extérieur de 15,2 mm, composé de six fils en acier ayant chacun un diamètre de 5 mm, entourant un fil central en acier ayant diamètre 5,2 mm. Le câble avait donc une section d'acier de 139 mm². Les sept fils étaient en acier clair ayant une résistance à la rupture de 180 kg/mm² (environ 180 daN/mm²). Dans le deux cas le manchon était en acier 35 CDA ayant une résistance à la rupture de 90 kg/mm² (environ 90 daN/mm²) et une dureté ROCKWELL C de 27/29 HRC. Dans les deux cas, l'orifice d'entrée 6 de la filière 7 avait une pente de 8°30' et une longueur de 30 mm, son orifice 17 avait un diamètre de 31,8 mm et une longueur de 5 mm, et son orifice de sortie avait un diamètre de 32 mm et une longueur de 5 mm.

Dans le cas de l'ancrage avec manchon fileté intérieurement, le filetage intérieur du manchon avait une profondeur de 0,5 mm et un pas de 1 mm. Le manchon avait été traité avec un inducteur fabriqué par la Société «PARTIOT» décrit plus haut, alimenté en courant à une fréquence de 200 kHz. Le liquide de trempe était une solution aqueuse de polyalkylène glycol à une température comprise entre 25 et 35°C. La vitesse de rotation du mors de serrage 11 était de 250 t/mn, la vitesse moyenne de déplacement de l'inducteur 13 dans la zone correspondant à la partie rectiligne du profil 16 de la figure 1 était de 30 mm/s sur une distance de 25 mm, tandis que cette vitesse moyenne dans la zone correspondant à la partie courbe du profile 16 était de 25 mm/s sur la distance restante de 5 mm. Dans ces conditions, la profondeur de trempe était d'environ 0,5 mm à l'extrémité de la partie rectiligne du profil 16 située du côté du chanfrein 3, d'environ 2,5 mm à l'extrémité opposée de la partie rectiligne du profile 16 et d'environ 7 mm à l'extrémité extérieure de la partie courbe du profil 16. Après traitement thermique, la zone trempée 9 du manchon 1 avait une dureté ROCKWELL C de 62 HRC et une résistance à la rupture de 220 kg/mm² (environ 220 daN/mm²).

Il va de soi que le mode de réalisation de la présente invention qui a été décrit ci-dessus a été donné à titre d'exemple; et que de nombreuses modifications peuvent être apportées par l'homme de l'art sans pour autant sortir du cadre de la présente invention dont l'étendue de la protection est déterminée par la teneur des revendications.

C'est ainsi notamment que, bien qu'il soit plus commode d'exécuter un filetage dans la surface intérieure cylindrique 5 du manchon 1, toute autre forme de rainurage ou d'indentation pourrait être exécutée dans la surface intérieure cylindrique 5, comme par exemple une succession de gorges circulaires.

## Revendications

1. Procédé pour la réalisation d'un ancrage de précontrainte par filage d'un manchon (1) en acier sur une âme métallique (8) de forme allongée et ayant une section sensiblement ronde, caractérisé en ce qu'il consiste à utiliser un manchon (1) ayant un diamètre intérieur sensiblement égal au diamètre extérieur de l'âme métallique (8), à exécuter un rainurage ou indentation dans la surface cylindrique intérieure (5) du manchon (1), a soumettre ladite surface cylindrique intérieure (5) du manchon (1) et son rainurage à une trempe thermique superficielle propre à en augmenter la dureté et à lui donner une valeur supérieure à celle de l'âme métallique (8), en faisant croître la profondeur de trempe depuis une première extrémité du manchon (1), destinée à être engagée la première dans une filière (7), jusqu'à l'extrémité opposée du manchon, et à ancrer le manchon (1) sur l'âme métallique (8) de façon connue, par filage à travers la filière (7).

2. procédé selon la revendication 1, caractérisé en ce que l'opération de rainurage consiste à exécuter un filetage.

3. Procédé selon le revendication 1 ou 2, caractérisé en ce que ladite trempe thermique est effectuée à l'aide d'un inducteur (13) à haute fréquence muni de buses de projection de liquide de trempe, qui est déplacé le long de la surface cylindrique intérieure (5) du manchon (1) à une vitesse qui décroît depuis la première extrémité du manchon jusqu'à l'extrémité opposée dudit manchon.

4. Procédé selon la revendication 3, caractérisé en ce que l'inducteur (13) est déplacé à une vitesse qui décroit de manière uniforme depuis la première extrémité du manchon (1) sur la majeure partie de la longueur de celui-ci, puis à une vitesse qui décroît de plus en plus rapidement vers l'extrémité opposée du manchon.

## Patentansprüche

1. Verfahren zur Herstellung einer Vorspannungsverankerung durch Vorziehen einer Stahlmuffe (1) auf einem langgestreckten Metallkörper (8) mit im wesentlichen kreisförmigem Querschnitt, dadurch gekennzeichnet, dass eine Muffe (1) mit einem Innendurchmesser verwendet wird, der im wesentlichen gleich dem Aussendurchmesser des Metallkörpers (8) ist, dass in die zylindrische Innenfläche (5) der Muffe (1) eine Nut oder eine Zahnung eingebracht wird, dass die genannte zylindrische Innenfläche (5) der Muffe (1) und deren Zahnung einer geeigneten thermischen Oberflächenhärtung unterworfen wird, um die Härte zu erhöhen und auf einen Wert über derjenigen des Metallkörpers (8) zu bringen, indem man die Tiefe der Härtung von einem ersten Ende der Muffe (1) an, das als erstes in ein Zieheisen (7) eingebracht wird, bis zum gegenüberliegenden Ende der Muffe, anwachsen lässt, und dass die Muffe (1) auf dem Metallkörper (8) in bekannter Weise verankert wird, indem sie durch ein Zieheisen (7) gezogen wird.

2. Verfahren nach Anspruch 1, dadurch gekennzeichnet, dass die Herstellung der Nut durch Einschneiden eines Gewindes erfolgt.

3. Verfahren nach Anspruch 1 oder 2, dadurch gekennzeichnet, dass die thermische Härtung mit Hilfe eines Hochfrequenz-Induktors (13) erfolgt, der mit Düsen zum Ausspritzen einer Härtungsflüssigkleit versehen ist und der entlang der zylindrischen Innenfläche (5) der Muffe (1) mit einer Geschwindigkeit verschoben wird, die von dem ersten Ende der Muffe bis zum gegenüberliegenden Ende der Muffe abnimmt.

4. Verfahren nach Anspruch 3, dadurch gekennzeichnet, dass der Induktor (13) mit einer Geschwindigkeit verschoben wird, die vom ersten Ende der Muffe (1) an über deren grösseren Teil ihrer Länge gleichförmig abnimmt, und dass der Induktor dann mit einer Geschwindigkeit verschoben wird, die zum gegenüberliegenden Ende der Muffe hin immer schneller abnimmt.

## Claims

1. A method of constructing a prestressing anchoring means by drawing a steel sleeve (1) over an elongate metal core (8) having a substantially circular cross-section, characterised in that the sleeve (1) has an inner diameter substantially equal to the outer diameter of the metal core (8), grooves or an indentation are formed in the inner cylindrical surface (5) of the sleeve (1), and the inner cylindrical surface (5) of the sleeve (1) and the grooves are surface tempered so as to increase the hardness to a value greater than that of the metal core (8), the depth of tempering increases from a first end of the sleeve (1) for first engaging in a draw-plate (7) to the other end of the sleeve, and the sleeve (1) is anchored on to the metal core (8) in known manner by drawing through the draw-plate (7).

2. A method according to claim 1, characterised in that the grooving operation consists of forming a thread.

3. A method according to claim 1 or 2, characterised in that the tempering is performed by means of a high-frequency inductor (13) having nozzles for spraying tempering liquid which is moved along the inner cylindrical surface (5) of the sleeve (1) from the first end of the sleeve to the other end of the sleeve at a decreasing speed.

4. A method according to claim 3, characterised in that the inductor (13) is moved at a speed which decreases in uniform manner from the first end of the sleeve (1) along the main part of its length, then at a speed which decreases more and more quickly towards the opposed end of the sleeve.

Fig.1

Fig.2

Fig.3

Fig.4